Europäisches Patentamt

European Patent Office

Office européen des brevets

(19)

(11) Veröffentlichungsnummer : **0 448 927 B1**

## (12) EUROPÄISCHE PATENTSCHRIFT

(45) Veröffentlichungstag der Patentschrift :
05.04.95 Patentblatt 95/14

(51) Int. Cl.$^6$ : **H04J 3/22**, H04Q 11/04

(21) Anmeldenummer : **91100427.3**

(22) Anmeldetag : **16.01.91**

(54) **Verfahren zum Übertragen von zeitdiskreten Informationen.**

(30) Priorität : **19.03.90 DE 4008729**

(43) Veröffentlichungstag der Anmeldung :
**02.10.91 Patentblatt 91/40**

(45) Bekanntmachung des Hinweises auf die
Patenterteilung :
**05.04.95 Patentblatt 95/14**

(84) Benannte Vertragsstaaten :
**DE FR GB IT NL**

(56) Entgegenhaltungen :
**DE-A- 3 211 966
US-A- 3 889 064
US-A- 4 099 028**

(56) Entgegenhaltungen :
**PROCEEDINGS OF THE SYMPOSIUM ON
COMPUTER COMMUNICATIONS NETWORKS
ANDTELETRAFFIC, 4. - 6. April 1972, Band 22,
Seiten 587-598, New York, US; I.CAPPETTI et
al.: "Structure of a communication network
and its control computers"**

(73) Patentinhaber : **KABEL RHEYDT
Aktiengesellschaft
Bonnenbroicher Strasse 2-14
D-41179 Mönchengladbach (DE)**

(72) Erfinder : **Hildebrandt, Hans-G., Dr.
Neuenhaus 16
W-5600 Wuppertal 12 (DE)**

(74) Vertreter : **Mende, Eberhard, Dipl.-Ing.
c/o Alcatel Kabel Beteiligungs-AG
Kabelkamp 20
D-30179 Hannover (DE)**

EP 0 448 927 B1

## Beschreibung

Die Erfindung bezieht sich auf ein Verfahren zum bidirektionalen Übertragen von zeitdiskreten Informationen zwischen mehreren Teilnehmern und einer zentralen Vermittlungsstelle eines Fernmeldenetzes, bei welchem die Informationen in zeitlich komprimierten Blöcken in einem periodisch wiederholten, aus hintereinander angeordneten Zeitintervallen bestehenden Zeitrahmen übertragen werden, in dem jedem Teilnehmer mindestens ein Zeitintervall zugeordnet wird, das sich ebenfalls periodisch wiederholt und in dem die dem jeweiligen Teilnehmer zugeordneten Informationen einschließlich eines Steuersignals übertragen werden.

Ein solches Verfahren ist mit einem digitalen Übertragungssystem beispielsweise für den Anschluß von Teilnehmern an ein zukünftiges gemeinsames Netz für Telefon-, Daten- und Textübertragungsdienste (dienstintegriertes Netz) vorgesehen. Es kann aber auch für die Übertragung von Analogwerten verwendet werden. Der Einfachheit halber wird im folgenden von einem Einsatz des Verfahrens bei digitalen Übertragungssystemen ausgegangen. Statt des auch für analoge Übertragung geltenden Wortes "Schrittfrequenz" wird dabei das Wort "Übertragungsrate" verwendet.

Bei üblichen Multiplexverfahren werden Informationen für mehrere Teilnehmer über einen einzigen gemeinsamen Übertragungskanal oder auch über einen sogenannten Bus übertragen. Ein derartiges Verfahren ist beispielsweise unter der Bezeichnung "TDMA" (Time Division Multiple Access) bekannt. Zur Durchführung desselben werden die zu übertragenden Informationen nach Maßgabe des Informationsaufkommens der Teilnehmer - z. B. mit einer Übertragungsrate von 64 kbit/s - in einem elektronischen Speicher zwischengespeichert, zeitlich zu Blöcken komprimiert und mit einer höheren Geschwindigkeit aus dem Speicher ausgelesen. Dadurch wird nur noch ein Bruchteil der Übertragungszeit benötigt.

Üblicherweise wird hierbei mit einer festen Übertragungsrate für das "Summensignal" gearbeitet, das der Summe der Übertragungsraten aller Teilnehmer entspricht. Wenn beispielsweise jedem Teilnehmer eine Übertragungsrate von 64 kbit/s zugeordnet ist, bedeutet das, daß für die gemeinsame Übertragung der Informationen von 10 Teilnehmern als Summensignal eine feste Übertragungsrate im Bereich von über 640 kbit/s vorgegeben ist. Derartige Systeme arbeiten in der Praxis mit ca. 800 kbit/s, da beispielsweise noch Schutzzeiten zu berücksichtigen sind.

Das TDMA-Verfahren - für das die weiteren Erläuterungen, stellvertretend für alle bekannten einsetzbaren Verfahren, gelten - läßt sich auch anwenden, wenn unterschiedliche Übertragungsraten für die einzelnen Teilnehmer vorliegen. Wenn zum Beispiel einige Teilnehmer eine Übertragungsrate von 64 kbit/s und andere Teilnehmer eine Übertragungsrate von 2 Mbit/s haben, wird üblicherweise eine feste Übertragungsrate für die Blöcke von Informationen von beispielsweise 34 Mbit/s vorgesehen. Die Empfangsgeräte aller Teilnehmer müssen für die hohe Übertragungsrate von 34 Mbit/s ausgelegt sein. Sie müssen bitweise über Zugriffsmöglichkeiten zum Informationsstrom verfügen, auch wenn die eigene Übertragungsrate sehr viel niedriger ist als die Übertragungsrate des Informationsstroms. Ein derartiges Verfahren ist im DE-A-3 211 966 beschrieben.

Der Erfindung liegt die Aufgabe zugrunde, das eingangs geschilderte Verfahren derart weiterzubilden, daß Teilnehmer mit unterschiedlicher Übertragungsrate wesentlich einfacher mit der Vermittlungsstelle kommunizieren können.

Diese Aufgabe wird gemäß der Erfindung dadurch gelöst,

- daß den Teilnehmern jeweils gleichlange Zeitintervalle zugeteilt werden und
- daß die Übertragung der Informationen in diesen Zeitintervallen mit einer für jeden Teilnehmer individuell festlegbaren Übertragungsrate durchgeführt wird.

Durch dieses Verfahren sind Teilnehmer mit niedrigen Übertragungsraten mit sehr viel weniger Aufwand an den Übertragungskanal anschließbar als Teilnehmer mit hohen Übertragungsraten. Die Teilnehmer empfangen immer nur Informationen mit einer Schrittgeschwindigkeit, die proportional zu der für den jeweiligen Teilnehmer festgelegten Übertragungsrate ist. Jedem Teilnehmer ist im zyklisch wiederkehrenden Zeitrahmen mindestens ein Zeitintervall zugeordnet, wobei die Zeitintervalle aller Teilnehmer gleich lang sind. Über eine Synchronisationsschaltung kann sichergestellt werden, daß jeder Teilnehmer zu Beginn des für ihn bestimmten Zeitintervalls ein Steuersignal bekommt, welches das Zeitintervall für die Übertragung der Informationen zwischen der Vermittlungsstelle und diesem Teilnehmer kennzeichnet. Damit verfügt jeder Teilnehmer über die Information, daß das für ihn bestimmte Zeitintervall für die Kommunikation mit der Vermittlungsstelle gegebenenfalls vorliegt.

Innerhalb des von einem Teilnehmer benutzbaren Zeitintervalls erfolgt der Informationsaustausch zwischen der Vermittlungsstelle und dem jeweiligen Teilnehmer mit einer frei wählbaren Übertragungsrate. Sie ergibt sich aus der von dem jeweiligen Teilnehmer für den jeweiligen Dienst benötigten Übertragungsrate und kann für alle Teilnehmer unterschiedlich sein. So kann beispielweise ein Teilnehmer, für den eine niedrige Übertragungsrate von z. B. 64 kbit/s gilt, seine Informationen mit einer um 1/32 kleineren Übertragungsrate auf den Übertragungskanal geben, als ein Teilnehmer mit einer Übertragungsrate von 2 Mbit/s. Für die Bemessung

EP 0 448 927 B1

der zeitlichen Länge der Zeitintervalle muß die maximal vorgesehene Anzahl der Teilnehmer vorher festliegen. Diese maximale Anzahl der Teilnehmer bestimmt den Faktor der Zeitaufteilung des Zeitrahmens. Bei beispielsweise 32 Teilnehmern beträgt die zeitliche Länge eines Zeitintervalls demnach 1/32 der zeitlichen Länge des Zeitrahmens.

Das Verfahren ist insbesondere für breitbandige Übertragungsmedien, wie Lichtwellenleiter, geeignet, da dort die Übertragungskapazität oft nicht vollständig ausgeschöpft wird.

Ausführungsbeispiele der Erfindung werden nachstehend anhand der Zeichnungen näher erläutert. Es zeigen:

Fig. 1 ein Blockschaltbild eines für das Verfahren nach der Erfindung geeigneten Übertragungssystems.

Fig. 2 Zeitrahmen und Zeitintervalle des Übertragungssystems.

Fig. 3 schematisch eine Teilnehmeranschalteinheit in der Vermittlungsstelle.

Fig. 4 eine Auswerteschaltung bei einem Teilnehmer.

Fig. 5 zusätzliche Schaltungseinheiten für höhere Übertragungsraten.

Fig. 6 eine teilnehmerseitige Sendeeinrichtung.

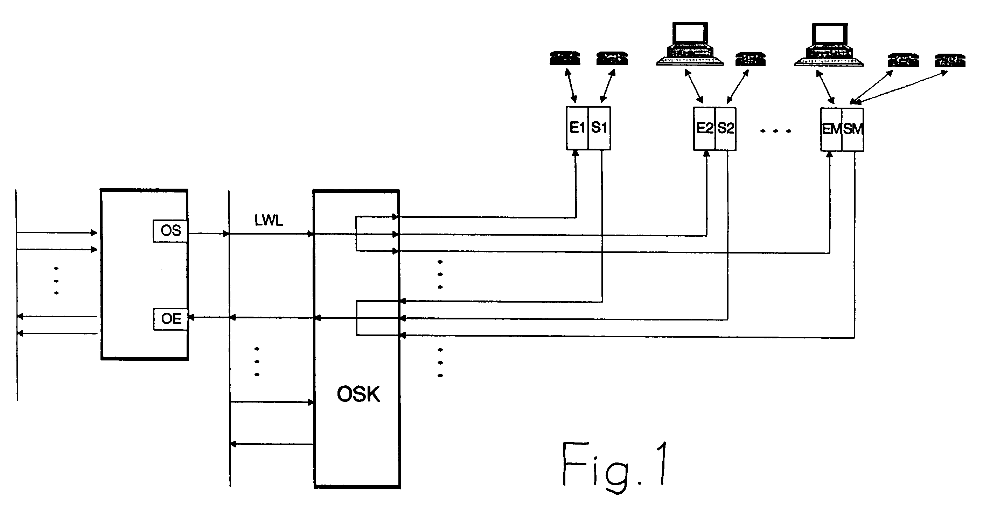

Fig. 1 zeigt ein Übertragungssystem mit einem optischen Teilnehmeranschluß mit passiver Sternstruktur. Im oberen Teil von Fig. 1 ist die Richtung von der Vermittlungsstelle Z eines Fernmeldenetzes zu Teilnehmern dargestellt, während der untere Teil die Richtung von den Teilnehmern zur Vermittlungsstelle Z zeigt. Der in der Vermittlungsstelle Z befindliche optische Sender OS sendet Blöcke von Informationen auf den Lichtwellenleiter LWL. Diese optischen Signale werden durch einen passiven Sternkoppler OSK auf mehrere Lichtwellenleiter verteilt und zu mehreren Empfangsstationen E1, E2 ... EM geleitet. Alle Empfangsstationen E1, E2 ... EM empfangen damit die vom optischen Sender OS ausgesandten Informationen.

In der Richtung zur Vermittlungsstelle Z müssen die Informationen der einzelnen Teilnehmersender S1, S2 ... SM kollisionsfrei zusammengefügt werden. Dieses geschieht durch eine weiter unten beschriebene Synchronisation, die die exakte zeitliche Aufeinanderfolge der Informationen gewährleistet. Die Superposition der einzelnen optischen Signale der Teilnehmersender S1, S2 ... SM erfolgt wiederum im passiven Sternkoppler OSK, so daß auf dem Lichtwellenleiter LWL zwischen diesem Sternkoppler OSK und der Vermittlungsstelle Z eine kollisions- und überlappungsfreie Information aller Teilnehmer vorliegt.

Bei dem als Beispiel gewählten TDMA-System zur Kommunikation mit Teilnehmern mit unterschiedlichen Übertragungsraten ist es meist so, daß der größte Teil der Teilnehmer mit einer niedrigen Übertragungsrate für Basisdienste (z. B. normales Telefon) zu versorgen ist. Da diese Teilnehmer somit am häufigsten vorkommen, müssen ihre Anschlußeinrichtungen insgesamt mit geringstmöglichem Aufwand realisierbar sein. Zur weiteren Erläuterung des Verfahrens werden drei Teilnehmergruppen mit unterschiedlichen Übertragungsraten angenommen:

Die Teilnehmergruppe I ist für die oben schon genannten Basisdienste mit der niedrigsten Übertragungsrate zu versorgen. Die Teilnehmergruppe II besteht aus Teilnehmern, die gegenüber der Teilnehmergruppe I eine etwa drei- bis vierfach höhere Übertragungsrate benötigen, während die Teilnehmergruppe III beispielsweise eine gegenüber der Teilnehmergruppe I dreißigfach höhere Übertragungsrate aufweisen soll. Das Übertragungssystem zur Durchführung des Verfahrens wird nun so ausgestaltet, daß alle drei Teilnehmergruppen I bis III Steuer- und Kontrollinformationen mit einer gleichbleibenden Basisrate verarbeiten können. Für die Teilnehmergruppe I werden auch die Informationen mit dieser Basisrate übertragen. Die Informationen für die Teilnehmergruppen II und III werden mit erhöhten Übertragungsraten übertragen. Die Übertragung erfolgt für jeden Teilnehmer in einem ihm zugeordneten Zeitintervall. Die Zeitintervalle aller Teilnehmer bilden den zyklisch wiederkehrenden Zeitrahmen.

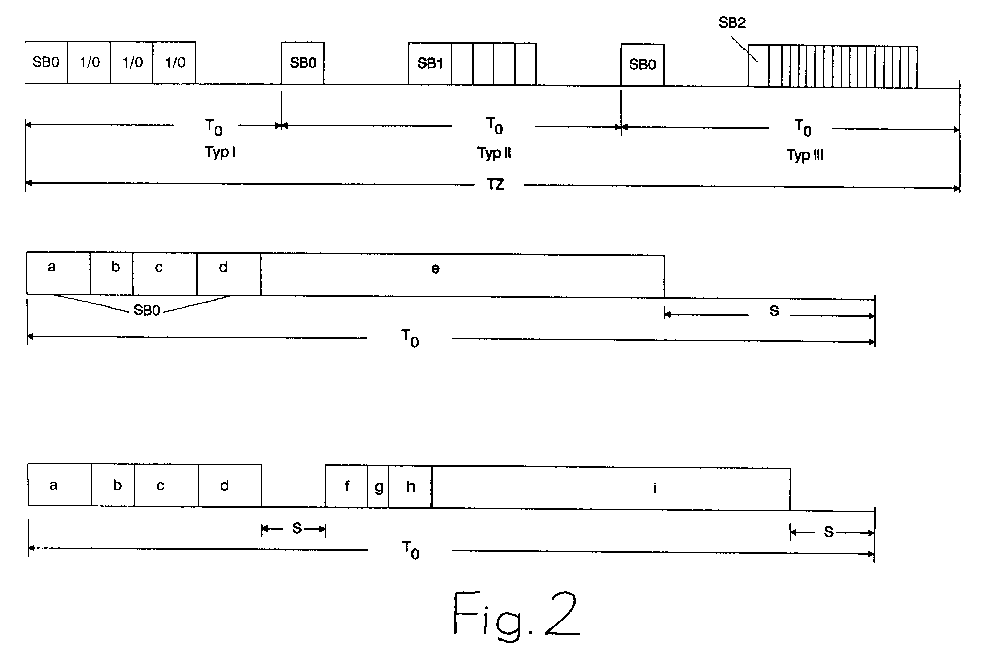

Der Aufbau eines TDMA-Zeitrahmens TZ ist in Fig. 2 in der oberen Darstellungsebene gezeigt. Die Zeitachse verläuft von links nach rechts. Sie ist linear geteilt. Ausgehend davon, daß eine Anzahl von N Teilnehmern jeweils einen unabhängigen Übertragungskanal zur Kommunikation mit der Vermittlungsstelle haben soll und daß die Informationen über ein einziges Übertragungsmedium (z. B. über Lichtwellenleiter) übertragen werden sollen, gilt folgendes:

Der Zeitrahmen TZ wird entsprechend der Anzahl N der Teilnehmer in N gleichlange Zeitintervalle der Länge $T_0$ eingeteilt. Jeder Teilnehmer kommuniziert mit der Vermittlungsstelle Z in einem ihm fest zugeordneten Zeitintervall. Dabei kann die Zahl der Teilnehmer größer sein als die Zahl der Sende- bzw. Empfangseinrichtungen, an die mehrere Teilnehmer anschließbar sind (s. Fig. 1). Innerhalb dieser Zeitintervalle erfolgt die Kommunikation der Teilnehmer mit der Vermittlungsstelle Z entweder mit der Basisrate (Teilnehmergruppe I) oder mit erhöhten Übertragungsraten (Teilnehmergruppen II und III).

Fig. 2 zeigt in der mittleren Darstellungsebene den schematischen Aufbau eines Zeitintervalls für die Teilnehmergruppe I (Basisrate). Die Übertragung von Informationen beginnt mit dem Aussenden eines Steuersignals SBO, das aus vier Feldern a, b, c und d besteht. Feld a enthält eine 1-0 Bitfolge zur Taktsynchronisation. Feld b enthält eine Bitkombination als Startcode, der dazu dient, eindeutig den Beginn der Verarbeitung der

3

in den folgenden Feldern c, d und e übertragenen Signale und Informationen zu kennzeichnen. Feld c enthält die Adresse des zugehörigen Teilnehmers. Feld d ist für die Steuerung des Sende- und Empfangsablaufes vorgesehen. Das nachfolgende Feld e enthält die zu übertragende Information. Die in diesem Zeitintervall verbleibende Schutzzeit S verhindert eine Überlappung mit Informationen anderer Zeitintervalle.

In der unteren Darstellungsebene von Fig. 2 ist der entsprechende Aufbau eines Zeitintervalls für die höheren Übertragungsraten der Teilnehmergruppen II und III dargestellt. Dieses Zeitintervall beginnt zunächst - wie das Zeitintervall der Teilnehmergruppe I - mit dem bereits beschriebenen Steuersignal SBO, an das sich eine Schutzzeit S anschließt. Es folgt ein zweites Steuersignal mit einer jetzt höheren Übertragungsrate. Das zweite Steuersignal besteht aus drei Feldern f, g und h. Feld f enthält die Synchron-Informationen zur Taktrückgewinnung. Feld g ist für die Startkennung vorgesehen und Feld h enthält zusätzliche Adress-und Dateninformationen. Im Feld i schließt sich dann die zu übertragende Information an. Auch dieses Zeitintervall wird durch eine Schutzzeit S aufgefüllt.

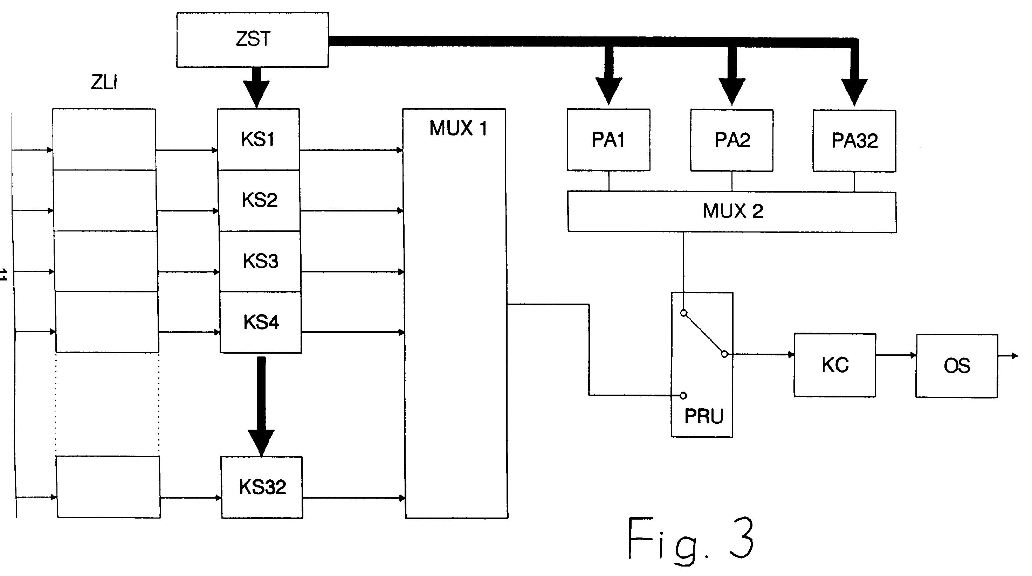

Eine Ausführungsform der zentralen Teilnehmeranschalteinheit ist in Fig. 3 für die Senderichtung von der Vermittlungsstelle Z zu den Teilnehmern dargestellt. Im vorliegenden Beispiel wird angenommen, daß 32 Teilnehmer an das TDMA-System angeschlossen sind:

Die Teilnehmerleitungen werden über ein zentrales Leitungsinterface ZLI angeschlossen. Die als digitale Signale zu übertragendem Informationen der 32 Teilnehmer werden jeweils kontinuierlich in Kompressionsspeicher KS1 bis KS32 übernommen. Eine zentrale Steuerung ZST ist über einen Steuer-Bus mit allen Kompressionsspeichern KS1 bis KS 32 verbunden. Wesentliche Signale in diesem Steuer-Bus sind die Taktsignale für die Teilnehmergruppen I, II und III mit unterschiedlichen Übertragungsgeschwindigkeiten. Die zentrale Steuerung ZST teilt außerdem jedem der Kompressionsspeicher KS1 bis KS32 den Zeitbereich mit, in dem die Signale (Informationen) mit den zugehörigen Taktsignalen der verschiedenen Übertragungsraten auszulesen sind. Die zu Blöcken komprimierten Signale werden in einem Multiplexer MUX1 zusammengefaßt und über einen Umschalter PRU auf einen Kanalcoder KC und schließlich auf einen optischen Sender OS gegeben.

Gemäß dem in Fig. 2 dargestellten Zeitrahmen muß jeder Information ein Steuersignal vorangestellt werden. Hierzu sind die Generatoren PA1 bis PA32 vorgesehen, die während der Zeiten, in denen das Steuersignal übertragen wird, über einen Multiplexer MUX2 und den Umschalter PRU auf den Übertragungskanal geschaltet werden. Die erwähnten Generatoren PA1 bis PA32 enthalten Speicher, die über einen zentralen Steuer- und Datenbus mit der zentralen Steuereinheit ZST verbunden sind. Über diesen Steuer- und Datenbus werden die Speicher mit den individuellen Steuersignalen für jeden Teilnehmer gefüllt.

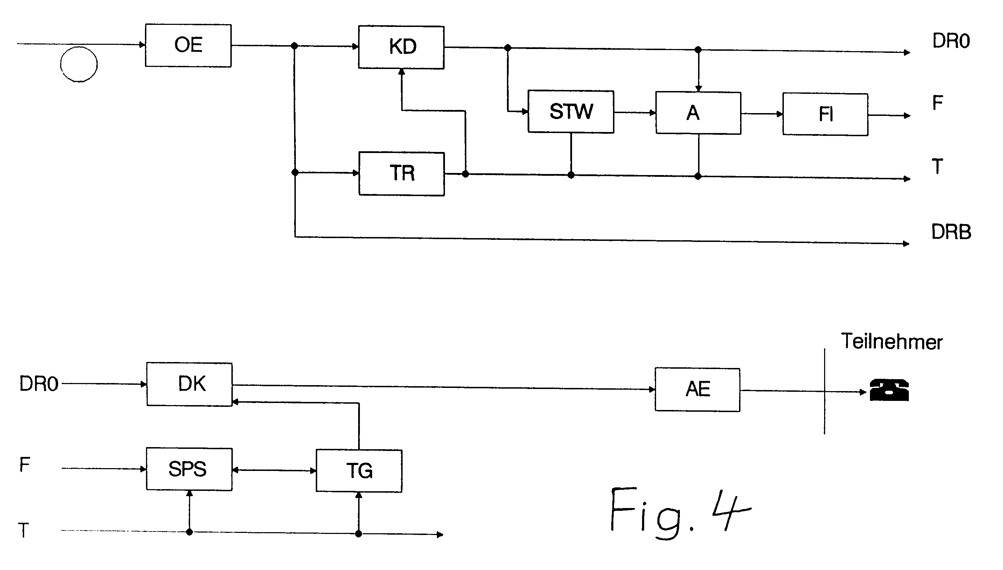

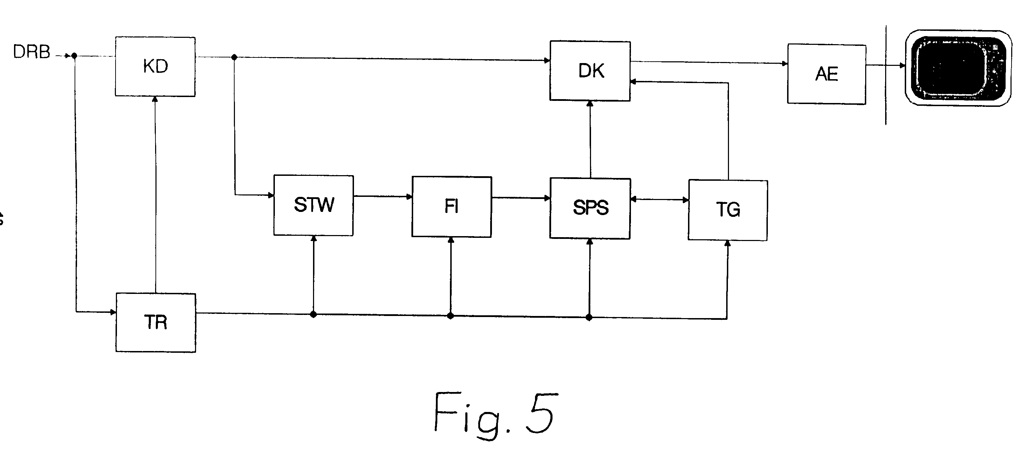

In den Fig. 4 und 5 sind Empfängerschaltungen der Teilnehmer dargestellt. Wegen der im Vorangehenden geschilderten unterschiedlichen Teilnehmergruppen I einerseits sowie II und III andererseits sind unterschiedliche Teilnehmeranschlußeinheiten vorgesehen. Zunächst soll die Teilnehmeranschlußeinheit für die Basisrate (Teilnehmergruppe I) beschrieben werden:

Der TDMA-Informationsstrom gelangt zunächst zu einer Auswertschaltung für das Steuersignal SBO, die im oberen Teil von Fig. 4 dargestellt ist. Bei der hier vorgesehenen optischen Übertragung der Informationen werden die optischen Signale im optischen Empfänger OE (optoelektrischer Wandler) in elektrische Signale umgewandelt. Mit dem in einer Taktrückgewinnung TR zurückgewonnenen Schrittakt T decodiert ein Kanaldecoder KD die vorliegenden Informationen. Nach Erkennen des Startwortes durch eine Baugruppe STW wird die Adresserkennung A aktiviert, die über den Generator FI ein Steuersignal F abgibt. Das Steuersignal kennzeichnet den Zeitbereich, in dem die zu dekomprimierende Information vorliegt.

Die weitere Bearbeitung der Informationen für Teilnehmer mit der Basisrate ist dann sehr einfach. Sie wird anhand des unteren Teils von Fig. 4 erläutert:

Die Information DRO wird in einem Dekompressionsspeicher DK dekomprimiert. Dieser Vorgang wird von einer Speichersteuerung SPS gesteuert. Der kontinuierliche ausgangsseitige Informationsstrom zum Teilnehmer wird mit der von einem Taktgenerator TG erzeugten Taktrate auf eine Anschalteinheit AE geführt, an die das Teilnehmerendgerät angeschlossen ist. Die im oberen Teil von Fig. 4 dargestellte Schaltung zur Auswertung des Steuersignals SBO wird auch für die Informationen der höheren Übertragungsrate für die Teilnehmergruppen II und III benötigt (Signal DRB).

Der Teilnehmeranschluß bei bei höheren Übertragungsraten erfordert die in Fig. 5 dargestellten zusätzlichen Schaltungseinheiten. Entsprechend der Auswertung für das Steuersignal SBO ist eine Auswertschaltung für die höherratigen Steuersignale SB1 und SB2 (Fig. 2) nachgeschaltet, die die breitbandige Information DRB - wie bei der Basisrate beschrieben - auswertet.

Bei der Übertragung von Informationen von den Teilnehmern zur Vermittlungsstelle Z muß der Zeitpunkt, zu dem der jeweilige Teilnehmer seine Information innerhalb des TDMA-Zeitrahmens absendet, genau so festgelegt werden, daß keine Überlappung mit Informationen anderer Teilnehmer auftreten kann. Zur Lösung dieses Problems können die Informationsblöcke, die vom Teilnehmer zur Vermittlungsstelle Z übertragen werden sollen, über einen Laufzeitausgleich LZA so lange verzögert werden, daß sich eine konstante Umlaufzeit für alle Teilnehmer - die sich in unterschiedlicher Entfernung von der Vermittlungsstelle Z befinden - ergibt. Die erforderliche zusätzliche Laufzeit kann z. B. ermittelt werden, indem der Sender der Vermittlungsstelle Z ein Informationspaket abschickt, das unmittelbar wieder vom Sender des Teilnehmers zum Empfänger der Vermittlungsstelle Z zurückgeschickt wird.

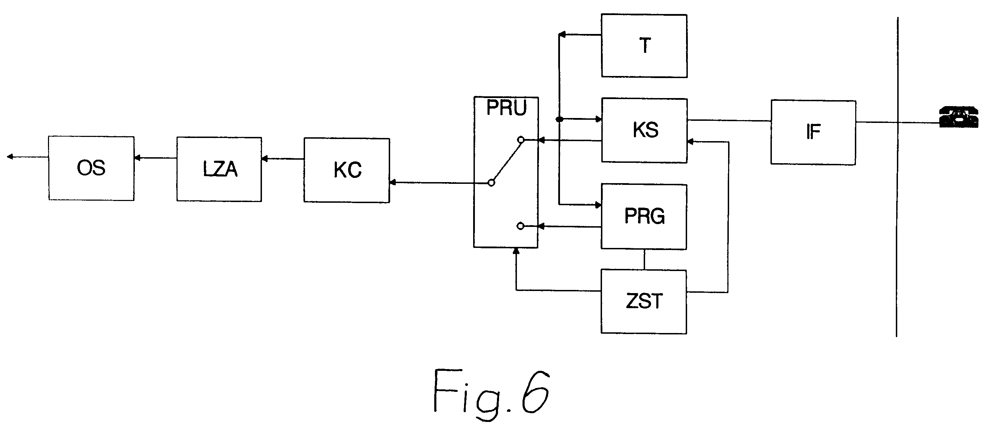

Fig. 6 zeigt den prinzipiellen Aufbau einer teilnehmerseitigen Sendeeinrichtung. Die vom Teilnehmer zur Vermittlungsstelle Z zu übertragenden Informationen gelangen über ein Interface IF auf einen Kompressionsspeicher KS. Das im Generator PRG erzeugte Steuersignal und die im Kompressionsspeicher KS gespeicherten Informationen werden - gesteuert von der zentralen Steuerung ZST - mit dem Kompressionstakt T ausgelesen, gelangen über den Umschalter PRU, einen Kanalcoder KC und den Laufzeitausgleich LZA schließlich zum optischen Sender OS.

Die Verarbeitung der von der Vermittlungsstelle Z empfangenen TDMA-Informationen erfolgt in ähnlicher Weise wie bei den bereits beschriebenen Empfangseinrichtungen in den Teilnehmeranschlußeinheiten.

Im Text sind folgende Abkürzungen verwendet:

| | | | |
|---|---|---|---|
| Z | Vermittlungsstelle | TR | Taktrückgewinnung |
| E | Empfangsstation | T | Takt |

| | | | |
|---|---|---|---|
| S | Teilnehmersender | STW | Startworterkennung |
| OS | Optischer Sender | A | Adresserkennung |
| OE | Optischer Empfänger | FI | Steuersignal-Generator |
| LWL | Lichtwellenleiter | F | Steuersignal |
| OSK | Sternkoppler | DRO | Information (Basisrate) |
| ZLI | Zentrales Leitungs-interface | DRB | Information (höhere Rate) |
| | | DK | Dekompressionsspeicher |
| ZST | Zentrale Steuerung | SPS | Speichersteuerung |
| KS | Kompressionsspeicher | TG | Taktgenerator |
| MUX | Multiplexer | AE | Anschalteinheit |
| PA | Generator | LZA | Laufzeitausgleich |
| PRU | Umschalter | PRG | Steuersignal-Generator |
| KC | Kanalcoder | IF | Interface |
| KD | Kanaldecoder | | |

## Patentansprüche

1. Verfahren zum bidirektionalen Übertragen von zeitdiskreten Informationen zwischen mehreren Teilnehmern und einer zentralen Vermittlungsstelle eines Fernmeldenetzes, bei welchem die Informationen in zeitlich komprimierten Blöcken in einem periodisch wiederholten, aus hintereinander angeordneten Zeitintervallen bestehenden Zeitrahmen übertragen werden, in dem jedem Teilnehmer mindestens ein Zeitintervall zugeordnet wird, das sich ebenfalls periodisch wiederholt und in dem die dem jeweiligen Teilnehmer zugeordneten Informationen einschließlich eines Steuersignals übertragen werden, dadurch gekennzeichnet,
   - daß den Teilnehmern jeweils gleichlange Zeitintervalle zugeteilt werden und
   - daß die Übertragung der Informationen in diesen Zeitintervallen mit einer für jeden Teilnehmer individuell festlegbaren Schrittfrequenz durchgeführt wird.

2. Verfahren nach Anspruch 1, dadurch gekennzeichnet, daß die Übertragungsgeschwindigkeit, mit welcher die Teilnehmer und die Vermittlungsstelle kommunizieren, generell frei wählbar ist, für jeden Teilnehmer aber auf einen bestimmten Wert festgelegt wird.

3. Verfahren nach Anspruch 1 oder 2, <u>dadurch gekennzeichnet</u>, daß die den einzelnen Teilnehmern zugeteilten Zeitintervalle im Zeitrahmen durch Schutzzeiten getrennt sind.

4. Verfahren nach einem der Ansprüche 1 bis 3, <u>dadurch gekennzeichnet</u>, daß die Übertragung der Informationen über Lichtwellenleiter und Sternkoppler in einem passiven optischen Sternnetz erfolgt.

5. Verfahren nach einem der Ansprüche 1 bis 3, <u>dadurch gekennzeichnet</u>, daß die Übertragung der Informationen über linienförmig verlegte Lichtwellenleiter und mit örtlich verteilten optischen Abzweigern erfolgt.

6. Verfahren nach einem der Ansprüche 1 bis 5, <u>dadurch gekennzeichnet</u>, daß jeweils eine separate Übertragungsleitung für die Senderichtung und die Empfangsrichtung verwendet wird.

7. Verfahren nach einem der Ansprüche 1 bis 5, <u>dadurch gekennzeichnet</u>, daß eine gemeinsame Übertra-gungsleitung für die Senderichtung und die Empfangsrichtung verwendet wird.

8. Verfahren nach Anspruch 7, <u>dadurch gekennzeichnet</u>, daß die Senderichtung und die Empfangsrichtung durch Wellenlängenmultiplex separiert werden.

9. Verfahren nach einem der Ansprüche 1 bis 8, <u>dadurch gekennzeichnet</u>, daß als zeitdiskrete Informationen Analogwerte übertragen werden.

10. Verfahren nach einem der Ansprüche 1 bis 8, <u>dadurch gekennzeichnet</u>, daß als zeitdiskrete Informationen Digitalwerte übertragen werden.

11. Verfahren nach einem der Ansprüche 1 bis 10, <u>dadurch gekennzeichnet</u>, daß mehrere Teilnehmer an eine Teilnehmerstation angeschlossen werden, wobei jede Teilnehmerstation einen Sender und Empfänger für die Kommunikation mit der Zentrale aufweist.

## Claims

1. Method for the bidirectional transmission of time-discrete information between a plurality of subscribers and a central switching system of a telecommunication network, in which the information is transmitted in time-compressed blocks in a periodically repeated time frame comprising successive time intervals, in which each subscriber is assigned at least one time interval which is likewise periodically repeated, and in which the information assigned to the respective subscriber including a control signal is transmitted, characterized
   - in that time intervals having the same length in each case are assigned to the subscribers, and
   - in that the information in said time intervals is transmitted using a modulation rate that can be defined individually for each subscriber.

2. Method according to Claim 1, characterized in that the transmission rate at which the subscribers and the switching system communicate is generally freely selectable, but is defined as a specific value for each subscriber.

3. Method according to Claim 1 or 2, characterized in that the time intervals assigned to the individual subscribers are separated in the time frame by buffer periods.

4. Method according to one of Claims 1 to 3, characterized in that the information is transmitted over light waveguides and star couplers in a passive optical star network.

5. Method according to one of Claims 1 to 3, characterized in that the information is transmitted over linearly laid light waveguides and with locally distributed optical taps.

6. Method according to one of Claims 1 to 5, characterized in that a separate transmission line is used for the transmitting direction and the receiving direction in each case.

7. Method according to one of Claims 1 to 5, characterized in that a common transmission line is used for the transmitting direction and the receiving direction.

8. Method according to Claim 7, characterized in that the transmitting direction and the receiving direction are separated by wavelength-division multiplexing.

9. Method according to one of Claims 1 to 8, characterized in that analog values are transmitted as time-discrete information.

10. Method according to one of Claims 1 to 8, characterized in that digital values are transmitted as time-discrete information.

11. Method according to one of Claims 1 to 10, characterized in that a plurality of subscribers are connected to one subscriber station, each subscriber station having a transmitter and receiver for communication with the central station.


**Revendications**

1. Procédé de transmission bidirectionnelle d'informations, discrètes dans le temps, entre plusieurs abonnés et un central téléphonique d'un réseau de télécommunication, dans le cas duquel les informations sont transmises, par blocs périodiquement comprimés, dans un cadre temporel qui se répète périodiquement, qui est constitué d'intervalles de temps disposés l'un derrière l'autre, dans lequel à chaque abonné correspond au moins un intervalle de temps qui se répète également périodiquement et dans lequel sont transmises les informations, y compris un signal de commande, correspondant à chaque abonné,
   caractérisé par le fait
   - qu'à chacun des abonnés sont attribués des intervalles de temps d'égale longueur et
   - que la transmission des informations dans ces intervalles de temps s'effectue à une fréquence des éléments du signal qui peut être individuellement déterminée pour chaque abonné.

2. Procédé selon la revendication, caractérisé par le fait que la vitesse de transmission avec laquelle les abonnés et le central téléphonique communiquent peut de façon générale être librement choisie mais que pour chaque abonné elle est fixée à une valeur déterminée.

3. Procédé selon la revendication 1 ou 2, caractérisé par le fait que les intervalles de temps attribués aux différents abonnés sont séparés dans le cadre temporel par des intervalles de temps de garde.

4. Procédé selon l'une des revendications 1 à 3, caractérisé par le fait que la transmission des informations se fait au moyen de guides d'ondes lumineuses et de coupleurs pour réseau en étoile dans un réseau en étoile optique passif.

5. Procédé selon l'une des revendications 1 à 3, caractérisé par le fait que la transmission des informations se fait au moyen de guides d'ondes lumineuses posés en ligne et avec des embranchements optiques répartis localement.

6. Procédé selon la l'une des revendications 1 à 5, caractérisé par le fait que l'on emploie une ligne de transmission distincte dans le sens de l'émission et dans le sens de la réception.

7. Procédé selon l'une des revendications 1 à 5, caractérisé par le fait que l'on emploie une ligne de transmission commune dans le sens de l'émission et dans le sens de la réception.

8. Procédé selon la revendication 7, caractérisé par le fait que la transmission dans le sens de l'émission et dans le sens de la réception sont séparées par multiplexage de longueurs d'ondes.

9. Procédé selon l'une des revendications 1 à 8, caractérisé par le fait que sous forme d'informations discrètes dans le temps, on transmet des valeurs analogiques.

10. Procédé selon l'une des revendications 1 à 8, caractérisé par le fait que sous forme d'informations discrètes dans le temps on transmet des valeurs numériques.

11. Procédé selon l'une des revendications 1 à 10, caractérisé par le fait que plusieurs abonnés sont reliés à une station d'abonné, chaque station d'abonné présentant un émetteur et un récepteur pour la communication avec le central.

Fig. 1

Fig.2

EP 0 448 927 B1

Fig. 3

Fig. 4

EP 0 448 927 B1

Fig. 5

Fig.6

14